# EUROPÄISCHE PATENTSCHRIFT

(11) **EP 2 803 514 B1**
(45) Veröffentlichungstag und Bekanntmachung des Hinweises auf die Patenterteilung: **04.03.2020**
(21) Anmeldenummer: 14167720.3
(22) Anmeldetag: 09.05.2014
(51) Int. Cl.: B60G 99/00, B62D 33/06

(54) **Aufhängungseinrichtung**
Suspension device
Dispositif de suspension

(30) Priorität: 16.05.2013 DE 102013209138
(43) Veröffentlichungstag der Anmeldung: 19.11.2014
(73) Patentinhaber: Deere & Company, Moline, IL 61265 (US)
(72) Erfinder: von Holst Dr., Christian, 67310 Hettenleidelheim (DE); Scheff, Udo, Cedar Falls, IA 50613 (US)
(74) Vertreter: John Deere GmbH & Co. KG

(56) Entgegenhaltungen:
- EP-A1- 0 585 774
- WO-A2-2010/001204
- DE-A1- 4 210 132
- DE-A1-102008 063 812
- DE-A1-102009 026 503
- DE-C1- 4 419 221
- DE-T2- 69 815 439
- GB-A- 2 298 693

## Beschreibung

Die Erfindung betrifft eine Aufhängungseinrichtung für einen Aufbau einer landwirtschaftlichen Arbeitsmaschine, mit wenigstens einer zwischen einem Rahmenelement der Arbeitsmaschine und einem Aufbauelement des Aufbaus angeordneten Feder-Dämpferanordnung zur Dämpfung einer Relativbewegung zwischen Rahmenelement und Aufbauelement und einem zwischen dem Rahmenelement und dem Aufbauelement angeordneten Wattgestänge zur Begrenzung von Freiheitsgraden zwischen Rahmenelement und Aufbauelement.

Regelmäßig sind Fahrerkabinen, insbesondere diejenigen von Traktoren beziehungsweise derartigen landwirtschaftlichen Arbeitsmaschinen, entweder ungefedert oder in einer Weise gefedert, dass sie lediglich einen Freiheitsgrad gegenüber dem Rahmen beziehungsweise Chassis des Fahrzeugs aufweisen. In diesem Fall ist lediglich ein Nicken, dass heißt eine Relativbewegung der Fahrzeugkabine gegenüber dem Rahmen um eine Fahrzeugquerachse, möglich. In einem der Norm 2002/44/EC entsprechenden Test wird ein Insasse der Fahrerkabine sowohl Längsbewegungen, Querbewegungen als auch Vertikalbewegungen ausgesetzt. Insofern wäre es wünschenswert mehrere Freiheitsgrade in eine Aufhängungseinrichtung einer Fahrzeugkabine zu integrieren.

DE 698 15 439 T2, die eine Aufhängungseinrichtung gemäß Anspruch 1 offenbart, beschreibt ein Fahrerhaus mit Federung. Dabei ist das Fahrerhaus an einem vorderen Ende mit einer Kupplung zum Verschwenken gegen das Fahrgestell verbunden. An einem hinteren Ende ist ein Wattsgestänge vorgesehen. So zeigt die DE 10 2009 026 503 A1 eine Aufhängungseinrichtung zur federnden bzw. dämpfenden Aufhängung eines Massekörpers in Gestalt einer Fahrerkabine eines Lastkraftwagens relativ zu einem Unterbau in Gestalt eines Fahrzeugchassis. Zwischen der Fahrerkabine und dem Unterbau ist ein Wattgestänge angeordnet. Ein Federelement und/oder eine Dämpfungselement ist zwischen dem Wattschen Lenker und der Lageraufnahme des Wattschen Lenkers an der Fahrerkabine vorgesehen. Als ungünstig werden hierbei die geometrischen Verhältnisse erachtet, wonach an dem in seinen Abmessungen relativ kleinen Wattschen Lenker die Feder- und/oder Dämpfungskräfte angreifen.

Ausgehend hiervon besteht die Aufgabe der vorliegenden Erfindung darin, eine Aufhängungseinrichtung mit ausgewogenen kinematischen und geometrischen Verhältnissen bereitzustellen.

Die Aufgabe wird gelöst durch eine Aufhängungseinrichtung für einen Aufbau einer landwirtschaftlichen Arbeitsmaschine gemäß dem Hauptanspruch.

Erfindungsgemäß beschreibt ein Aufbau einer landwirtschaftlichen Arbeitsmaschine eine Fahrerkabine oder eine Fahrerplattform. Unter einem Aufbauelement wird beispielsweise die tragende Struktur der Fahrerkabine oder Fahrerplattform verstanden. Unter einem Rahmenelement der Arbeitsmaschine wird beispielsweise der Fahrzeugrahmen beziehungsweise das Chassis der Arbeitsmaschine verstanden.

In vorteilhafterweise wird durch die erfindungsgemäße Ausgestaltung der Aufhängungseinrichtung eine Entkopplung einer Nickbewegung bzw. Längsbewegung des Aufbaus von einer Vertikalbewegung des Aufbaus gewährleistet. Die erfindungsgemäße Aufhängungseinrichtung ist in der Lage einen Insassen des Aufbaus in Gestalt einer Fahrerkabine gegen schädliche durch das Rahmenelement induzierte Vibrationen in Längsrichtung, Querrichtung und Vertikalrichtung zu schützen. Dies ermöglicht einerseits einen verbesserten Insassenschutz gemäß Norm 2002/44/EC und anderseits einen erhöhten Fahrkomfort, insbesondere während des Einsatzes im Bereich der Transportarbeit.

Bevorzugt ist ein zwischen dem Rahmenelement und dem Aufbauelement angeordneter Querstabilisator vorgesehen. Hierdurch kann in vorteilhafter Weise eine Begrenzung von Wankbewegungen zwischen Rahmenelement und Aufbauelement erzielt werden.

Bevorzugt umfasst die Feder-Dämpferanordnung zumindest eine pneumatische Dämpfereinheit, eine hydropneumatische Dämpfereinheit oder eine Stahlfeder-Dämpfereinheit. Die Vorteile hierbei sind, dass je nach Anwendungsbereich der Aufhängungseinrichtung die geeignete Feder-Dämpferanordnung ausgesucht werden kann. Bevorzugt sind die Feder-Dämpferanordnung und das Wattgestänge an überwiegend entgegengesetzten Enden der Aufhängungseinrichtung bezogen auf eine Längsrichtung der Arbeitsmaschine angeordnet. Hierdurch ergibt sich insgesamt eine kompakte Anordnung, bei der ausreichend Bauraum für die Anordnung der einzelnen Komponenten der Aufhängungseinrichtung vorhanden ist.

Ein Ausführungsbeispiel der erfindungsgemäßen Aufhängungseinrichtung wird anhand der nachfolgenden Figuren beschrieben. Hierin zeigen:
- Figur 1: eine schematische Darstellung einer landwirtschaftlichen Arbeitsmaschine mit einer erfindungsgemäßen Aufhängungseinrichtung;
- Figur 2: eine Seitenansicht einer erfindungsgemäßen Aufhängungseinrichtung mit schematisierter Anbindung an ein Rahmenelement und eine Kabine und
- Figur 3: eine perspektivische Ansicht einer erfindungsgemäßen Aufhängungseinrichtung in isolierter Darstellung von der Peripherie.

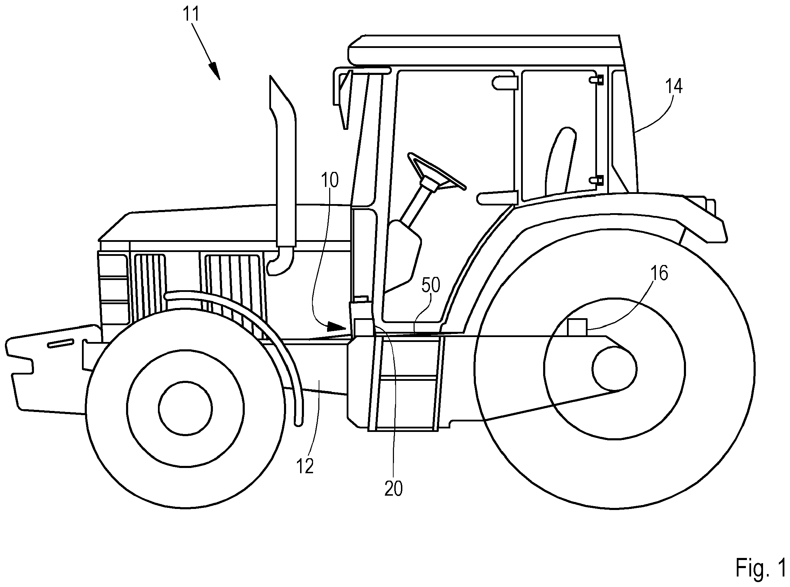

Die Figur 1 zeigt in schematischer Darstellung eine landwirtschaftliche Arbeitsmaschine 11 in Gestalt eines Schleppers mit einem Rahmenelement 12 und einem Aufbauelement 14 in Gestalt einer Kabine. Die Kabine 14 ist mittels einer erfindungsgemäßen Aufhängungseinrichtung 10 gegenüber dem Rahmenelement 12 gehalten. Desweiten umfasst der Schlepper 11 in nicht näher auszuführender Weise ein Antriebsaggregat, das über einen Antriebstrang eine Antriebsbewegung auf Räder zur Fortbewegung des Schleppers 11 überträgt. Die Aufhängungseinrichtung 10 umfasst ein Wattgestänge 20, über welches ein vorderes Ende der Kabine 14 mit dem Rahmenelement 12 verbunden ist, und eine Feder-Dämpferanordnung 16, über welche ein hinteres Ende der Kabine 14 mit dem Rahmenelement 12 verbunden ist. Die Feder-Dämpferanordnung 16 kann pneumatische Einheiten, hydropneumatische Einheiten oder mechanische FederDämpfer-Einheiten umfassen. Desweiteren kann zwischen dem Rahmenelement 12 und der Kabine 14 ein Querstabilisator 50 zur Begrenzung einer Wankbewegung zwischen dem Rahmenelement 12 und der Kabine 14 vorgesehen sein.

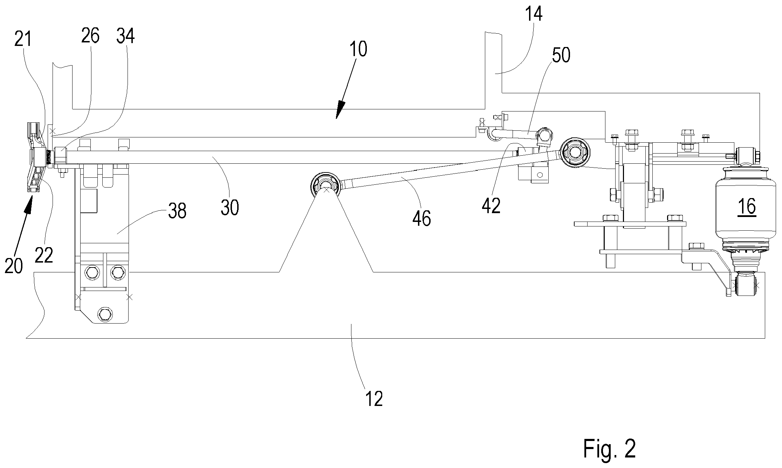

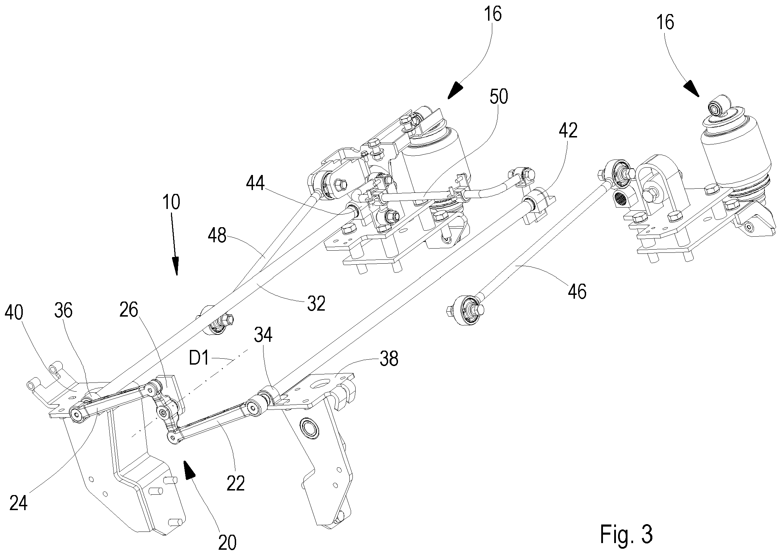

Die Figuren 2 und 3 werden nachfolgend gemeinsam beschrieben, wobei die Figur 2 eine Seitenansicht einer erfindungsgemäßen Aufhängungseinrichtung 10 mit schematisierter Anbindung an das Rahmenelement 12 und die Kabine 14 und die Figur 2 die erfindungsgemäße Aufhängungseinrichtung 10 in perspektivischer und von dem Rahmenelement 12 und dem Aufbauelement 14 isolierter Darstellung zeigt. Das Wattgestänge 20 weist einen Wattschen Lenker 21 und zwei Querschubstreben 22, 24 auf. Der Wattsche Lenker 21 ist um eine Schwenkachse D₁ schwenkbar an einem mit der Kabine 14 verbundenen Aufnahmeelement 26 gehalten. Hierbei befindet sich die Schwenkachse D₁ in einer senkrechten Mittelebene der Arbeitsmaschine 11 parallel zu der Fahrzeuglängsrichtung. Die zwei Querschubstreben 22, 24 sind mit ihren jeweils ersten Enden an entgegengesetzten Enden des Wattschen Lenkers 21 angelenkt. Die zweiten Enden der zwei Querschubstreben 22, 24 sind jeweils drehfest mit vorderen Enden zweier in Fahrzeuglängsrichtung angeordneten Federelementen 30, 32 in Form zweier Torsionsfederstäben verbunden. Im Bereich der vorderen Enden sind die Torsionsfederstäbe 30, 32 über jeweilige Anlenkungen 34, 36 drehbar an Aufnahmekonsolen 38, 40 gehalten, wobei die Aufnahmekonsolen 38, 40 mit dem Rahmenelement 12 verbunden sind. Die hinteren Enden der Torsionsfederstäbe 30, 32 sind über Einspannelemente 42, 44 gegenüber dem Rahmenelement 12 drehfest gehalten.

Zur Aufnahme von Längskräften sind zwischen dem Rahmenelement 12 und der Kabine 14 zu beiden Seiten Längslenker 46, 48 vorgesehen. Die Längslenker 46, 48 sind mit ihren vorderen Enden an dem Rahmenelement 12 und mit ihren hinteren Enden an der Kabine 14 angelenkt. Desweiteren kann zwischen dem Rahmenelement 12 und der Kabine 14 ein Querstabilisator 50 zur Begrenzung von Wanken zwischen dem Rahmenelement 12 und der Kabine 14 vorgesehen sein. Dies insbesondere dann, wenn die Feder-Dämpferanordnung 16 keine integrierte Wankstabilisation beinhaltet.

Durch diese Verbindung der Kabine 14 mit dem Rahmenelement 12 über das Wattgestänge 20 führt eine Vertikalbewegung der Kabine 14 gegenüber dem Rahmenelement 12 zu einer Verdrehung der Torsionsfederstäbe 30, 32 und somit zu eine federnden Abstützung der Kabine 14 gegenüber dem Rahmenelement 12. Demgegenüber wird ein Wanken der Kabine 14 gegenüber dem Rahmenelement 12 durch das Wattgestänge 20 nicht begrenzt, da eine Bewegung um die Schwenkachse D₁ nicht begrenzt ist.

### Bezugszeichenliste

- 10: Aufhängungseinrichtung
- 11: Arbeitsmaschine
- 12: Rahmenelement
- 14: Aufbauelement
- 16: Feder-Dämpferanordnung
- 20: Wattgestänge
- 21: Wattscher Lenker
- 22: Querschubstrebe
- 24: Querschubstrebe
- 26: Aufnahmeelement
- 30: Federelement
- 32: Federelement
- 34: Anlenkung
- 36: Anlenkung
- 38: Aufnahmekonsolen
- 40: Aufnahmekonsolen
- 42: Einspannelemente
- 44: Einspannelemente
- 46: Längslenker
- 48: Längslenker
- 50: Querstabilisator
- D₁: Schwenkachse

## Patentansprüche

1. Aufhängungseinrichtung (10) für einen Aufbau einer landwirtschaftlichen Arbeitsmaschine, umfassend
wenigstens eine zwischen einem Rahmenelement (12) der Arbeitsmaschine und einem Aufbauelement (14) des Aufbaus angeordnete Feder-Dämpferanordnung (16) zur Dämpfung einer Relativbewegung zwischen Rahmenelement (12) und Aufbauelement (14) und
ein zwischen dem Rahmenelement (12) und dem Aufbauelement (14) angeordnetes Wattgestänge (20) zur Begrenzung von Freiheitsgraden zwischen Rahmenelement (12) und Aufbauelement (14),
**dadurch gekennzeichnet, dass** das Wattgestänge (20) einen Wattscher Lenker (21) aufweist, der um eine Schwenkachse (D1) schwenkbar an einem mit dem Aufbauelement (14) verbundenen Aufnahmeelement (26) gehalten ist, wobei sich die Schwenkachse (D1) in einer senkrechten Mittelebene der Arbeitsmaschine parallel zur Fahrzeuglängsrichtung befindet,
und das Wattgestänge (20) zwei Querschubstreben (22, 24) aufweist, die jeweils mit einem Ende an entgegengesetzten Enden des Wattschen Lenkers (21) angelenkt sind und mit dem anderen Ende jeweils drehfest mit vorderen Enden von sich in Fahrzeuglängsrichtung angeordneten Federelementen (30, 32) in Form von Torsionsfederstäben verbunden sind, und
die Torsionsfederstäbe (30, 32) im Bereich der vorderen Enden über jeweilige Anlenkungen (34, 36) drehbar an Aufnahmekonsolen (38, 40) gehalten sind, wobei die Aufnahmekonsolen 38, 40 mit dem Rahmenelement 12 verbunden sind; und hintere Enden der Torsionsfederstäbe (30, 32) über Einspannelemente (42, 44) gegenüber dem Rahmenelement (12) drehfest gehalten sind,
zur Abstützung des Aufbauelements (14) gegenüber dem Rahmenelement (12) in Richtung eines unbegrenzten Freiheitsgrades zwischen Rahmenelement (12) und Aufbauelement (14).

2. Aufhängungseinrichtung (10) nach Anspruch 1, wobei ein zwischen dem Rahmenelement (12) und dem Aufbauelement (14) angeordneter Querstabilisator (18) zur Begrenzung einer Wankbewegung zwischen Rahmenelement (12) und Aufbauelement (14) vorgesehen ist.

3. Aufhängungseinrichtung (10) nach einem der Ansprüche 1 und 2, wobei die Feder-Dämpferanordnung (16) zumindest eine pneumatische Dämpfereinheit, eine hydropneumatische Dämpfereinheit oder eine Stahlfeder-Dämpfereinheit umfasst.

4. Aufhängungseinrichtung (10) nach einem der Ansprüche 1 bis 3, wobei die Feder-Dämpferanordnung (16) und das Wattgestänge (20) an überwiegend entgegengesetzten Enden der Aufhängungseinrichtung (10) bezogen auf eine Längsrichtung der Arbeitsmaschine angeordnet sind.

## Claims

1. Suspension device (10) for a body of an agricultural working machine, comprising
at least one spring/damper arrangement (16), arranged between a frame element (12) of the working machine and a body element (14) of the body, for damping a relative movement between the frame element (12) and body element (14), and
a Watt's linkage (20), arranged between the frame element (12) and the body element (14), for limiting degrees of freedom between the frame element (12) and body element (14),
**characterized in that** the Watt's linkage (20) has a Watt's link (21) that is held so as to be pivotable about a pivot axis (D1) on a receiving element (26) connected to the body element (14), wherein the pivot axis (D1) is located in a perpendicular midplane of the working machine parallel to the vehicle longitudinal direction,
and the Watt's linkage (20) has two transverse thrust rods (22, 24) that are each articulated at one end to opposite ends of the Watt's link (21) and are connected at the other end in each case in a rotationally fixed manner to front ends of spring elements (30, 32) in the form of torsion spring rods that are arranged in the vehicle longitudinal direction, and
the torsion spring rods (30, 32) are held in a rotatable manner on receiving brackets (38, 40) via respective articulations (34, 36) in the region of the front ends,
wherein the receiving brackets (38, 40) are connected to the frame element (12);
and rear ends of the torsion spring rods (30, 32) are held in a rotationally fixed manner with respect to the frame element (12) via clamping elements (42, 44),
in order to support the body element (14) with respect to the frame element (12) in the direction of an unlimited degree of freedom between the frame element (12) and body element (14).

2. Suspension device (10) according to Claim 1, wherein a transverse stabilizer (18), arranged between the frame element (12) and the body element (14), for limiting a rolling movement between the frame element (12) and body element (14) is provided.

3. Suspension device (10) according to either of Claims 1 and 2, wherein the spring/damper arrangement (16) comprises at least a pneumatic damper unit, a hydropneumatic damper unit or a steel spring damper unit.

4. Suspension device (10) according to one of Claims 1 to 3, wherein the spring/damper arrangement (16) and the Watt's linkage (20) are arranged at predominantly opposite ends of the suspension device (10) with regard to a longitudinal direction of the working machine.

## Revendications

1. Dispositif de suspension (10) pour une structure d'une machine agricole, comprenant :
au moins un système d'amortisseur à ressort (16) agencé entre un élément de châssis (12) de la machine et un élément structurel (14) de la structure afin d'amortir un mouvement relatif entre l'élément de châssis (12) et l'élément structurel (14) et
un parallélogramme de Watt (20) agencé entre l'élément de châssis (12) et l'élément structurel (14) pour restreindre les degrés de liberté entre l'élément de châssis (12) et l'élément structurel (14),
**caractérisé en ce que** le parallélogramme de Watt (20) comporte une bielle de Watt (21), laquelle est maintenue en pivotement autour d'un axe de pivot (D1) sur un élément de logement (26) relié à l'élément structurel (14), dans lequel l'axe de pivot (D1) se trouve dans un plan médian vertical de la machine parallèle à la direction longitudinale du véhicule,
et le parallélogramme de Watt (20) comporte deux jambes de force transversales (22, 24), lesquelles sont articulées respectivement à des extrémités opposées de la bielle de Watt (21) avec une extrémité et sont reliées respectivement de manière fixe en rotation avec les extrémités avant d'éléments de ressort (30, 32) se disposant dans la direction longitudinale du véhicule sous la forme de tiges de ressort de torsion, et
les tiges de ressort de torsion (30, 32) sont maintenues en rotation sur des consoles de logement (38, 40) dans la zone des extrémités avant par le biais de jointures articulées respectives (34, 36), dans lequel les consoles de logement (38, 40) sont reliées à l'élément de châssis (12) ; et les extrémités arrières des tiges de ressort de torsion (30, 32) sont maintenues de manière fixe en rotation par rapport à l'élément de châssis (12) par le biais d'éléments de serrage (42, 44),
afin de soutenir l'élément structurel (14) par rapport à l'élément de châssis (12) dans la direction d'un degré de liberté non-restreint entre l'élément de châssis (12) et l'élément structurel (14).

2. Dispositif de suspension (10) selon la revendication 1, dans lequel un stabilisateur transversal (18) est agencé entre l'élément de châssis (12) et l'élément structurel (14) pour restreindre un mouvement de roulis entre l'élément de châssis (12) et l'élément structurel (14).

3. Dispositif de suspension (10) selon l'une des revendications 1 et 2, dans lequel le système d'amortisseur à ressort (16) comprend au moins une unité d'amortissement pneumatique, une unité d'amortissement hydropneumatique ou une unité d'amortissement à ressort en acier.

4. Dispositif de suspension (10) selon l'une des revendications 1 à 3, dans lequel le système d'amortisseur à ressort (16) et le parallélogramme de Watt (20) sont agencés à des extrémités principalement opposées du dispositif de suspension (10) par rapport à une direction longitudinale de la machine.
